# EUROPÄISCHE PATENTSCHRIFT

(11) **EP 1 664 488 B1**
(45) Veröffentlichungstag und Bekanntmachung des Hinweises auf die Patenterteilung: **30.07.2008**
(21) Anmeldenummer: 04816185.5
(22) Anmeldetag: 30.08.2004
(51) Int. Cl.: F01B 3/00

(54) **HOHLKOLBEN F R EINE KOLBENMASCHINE UND VERFAHREN ZUM HERSTEL LEN EINES HOHLKOLBENS**
HOLLOW PISTON FOR A PISTON ENGINE AND METHOD FOR PRODUCING THE SAME
PISTON CREUX DESTINE A UNE MACHINE A PISTONS ET PROCEDE DE FABRICATION D'UN PISTON CREUX

(30) Priorität: 10.09.2003 DE 10341791
(43) Veröffentlichungstag der Anmeldung: 07.06.2006
(73) Patentinhaber: Brueninghaus Hydromatik GmbH, 89275 Elchingen (DE)
(72) Erfinder: BECK, Josef, 78050 Villingen (DE)
(74) Vertreter: Körfer, Thomas
(86) Internationale Anmeldenummer: PCT/EP2004/009644
(87) Internationale Veröffentlichungsnummer: WO 2005/028928

(56) Entgegenhaltungen:
- DE-A- 19 706 075
- DE-A- 19 938 046
- US-A- 3 828 654
- US-A- 5 724 733
- US-B1- 6 318 242

## Beschreibung

Die Erfindung betrifft einen Hohlkolben und ein Verfahren zum Herstellen eines Hohlkolbens.

An einen Hohlkolben der vorliegenden Art sind aus verschiedenen Gründen besondere Anforderungen gestellt. Es handelt sich zum einen um ein Massenprodukt, das in einer großen Anzahl hergestellt und vertrieben wird. Dies ist nicht nur darin begründet, das eine Kolbenmaschine, eine Mehrzahl Hohlkolben umfasst, sondern dies ist auch dadurch begründet, dass es sich bei einem Hohlkolben um ein typisches Verschleißteil handelt, das nach bestimmten Laufzeiten auszutauschen ist. Aus diesen Gründen bestehen besondere Anforderungen bezüglich einer einfachen, schnellen und kostengünstigen Herstellung.

Außerdem ist die Verschleißfestigkeit des Hohlkolbens unter anderem von seinem Gewicht abhängig, das möglichst gering sein soll, um im Betrieb des Hohlkolbens die Fliehkräfte möglichst gering zu halten, die den Verschleiß forcieren.

Eine weitere Anforderung besteht darin, eine stabile Bauweise zu erreichen, die sowohl den im Betrieb auftretenden Druckbelastungen als auch Biegebelastungen standhält und eine Gewichtsreduzierung bei möglichst dünnwandiger Bauweise ermöglicht. Diesbezüglich ist zu erwähnen, dass eine lange Kolbenmantelfläche sowohl die Flächenpressung als auch das Kippmoment des Hohlkolbens vermindert.

Ein Hohlkolben der im Oberbegriff des Anspruchs 1 angegebenen Art ist in der DE 197 06 075 A1 beschrieben. Dieser vorbekannte Hohlkolben weist einen hohlzylindrischen Kolbenschaft auf, der sich von einem verjüngten Basisabschnitt in der einen Achsrichtung erstreckt, wobei sich vom Basisabschnitt in die andere Achsrichtung ein Gelenkteil in Form eines Kugelkopfes erstreckt, der ebenfalls hohl ausgebildet ist. Der gesamte Hohlkolben wird von einem zentralen Dorn durchsetzt, der ein separates Bauteil ist, das koaxial in den Hohlkolben in Löchern eingeschoben und darin fixiert ist. Der Basisabschnitt ist durch eine ringförmige Einformung der Umfangswand eines Kolbenrohlings gebildet, wobei die Einformung gegen die Mantelfläche des vorzugsweise hohlen Dornes gedrückt ist. Am vorderen Ende des Hohlkolbens ist eine von der Umfangswand ausgehende ringförmige Stirnwand eingeformt, die mit ihrem inneren Rand ebenfalls gegen die Mantelfläche des Dorns geformt ist. Der Dorn ist so lang bemessen, dass er den Hohlkolben von der Stirnwand bis zum rückseitigen Ende des Kolbenkopfes durchsetzt, wobei die den Kolbenkopf bildende Umfangswand ebenfalls ringförmig gegen die Mantelfläche des Dorns eingeformt ist. Die vorderseitige und rückseitige Einformung ist mit einer so großen Einformungskraft ausgeführt, dass die hohle Umfangswand des Dorns ebenfalls im Sinne einer Taille eingeformt ist. Hierdurch ist der Dorn axial im Hohlkolben fixiert. Bei diesem Hohlkolben ist sowohl die Herstellung als auch Lagerhaltung für den als zusätzliches Bauteil einzuarbeitenden Dorn aufwendig.

Ein aus der DE 199 38 046 A1 entnehmbarer Hohlkolben unterscheidet sich von den vorbeschriebenen Hohlkolben dadurch, dass die Hohlkolbenbasis nicht durch eine Einformung, sondern massiv ausgebildet ist, das Gelenkteil durch eine rückseitig offene kalottenförmige Gelenkausnehmung gebildet ist und der Dorn als Hohldorn an das Basisteil angeformt ist und sich einteilig zum vorderen Ende des Hohlkolbens erstreckt, wo wiederum eine Stirnwand gegen seine Mantelfläche eingeformt ist. Dieser bekannte Hohlkolben ist dadurch stabilisiert, dass der Dorn einteilig an den Basisabschnitt angeformt ist. Die kalottenförmige Gelenkausnehmung ist spanabhebend in die Rückseite des Hohlkolbens eingeformt.

Die US 6,318,242 B1 offenbart einen gefüllten Kolben für eine Axialkolbenpumpe oder einen Axialkolbenmotor mit einer Umfangswand, einem zentralen Einsatzstück, einem Gelenkteil und einer ringförmigen Einformung. Dieses Dokument beschreibt damit einen gefüllten Kolben, von dem sich der Gegenstand des Anspruchs 1 dadurch unterscheidet, dass zwischen dem Einsatzstück und der Umfangswand ein Hohlraum vorhanden ist, dass die Einformung gegen das Einsatzstück geformt ist, und dass ein rückseitiger Abschnitt der Einformung einen vorderen Abschnitt des Gelenkteils bildet.

Der Erfindung liegt die Aufgabe zugrunde, einen Hohlkolben und ein Verfahren zur Herstellung eines Hohlkolbens derart auszugestalten, dass bei Gewährleistung einer guten Kolbenführung der Hohlkolben stabilisiert wird.

Diese Aufgabe wird durch die Merkmale der Ansprüche 1 oder 9 gelöst. Vorteilhafte Weiterbildungen sind in den zugehörigen Unteransprüchen beschrieben.

Der Erfindung liegt die Erkenntnis zugrunde, dass bei einem in der DE 199 38 046 A1 beschriebenen Hohlkolben mit einem rückseitigen Gelenkteil in Form einer kalottenförmigen Ausnehmung die Mantelfläche des Hohlkolbens das Gelenkteil überdeckt und deshalb eine lange und große Mantel- bzw. Führungsfläche für den Hohlkolben bei Verringerung des im Betrieb am Hohlkolben wirksamen Kippmoments vorhanden ist und deshalb diese Ausgestaltung angestrebt werden sollte.

Bei der erfindungsgemäßen Ausgestaltung endet der Dorn im Bereich der Einformung, wodurch es ermöglicht wird, das Gelenkteil in Form einer kalottenförmigen Ausnehmung auszubilden. Hierdurch wird die Mantel- bzw. Führungsfläche des Hohlkolbens verlängert und vergrößert, wobei die im Betrieb auftretenden Kippmomente im Bereich der Führungsfläche liegen und deshalb eine dadurch vorgegebene schädliche Wirkung auf den Hohlkolben wesentlich reduziert ist. Außerdem ist eine stabile Bauweise zum einen durch eine beim Einformen stattfindende Gefügeverfestigung gewährleistet und zum anderen dadurch gewährleistet, dass die Einformung und der Dorn aneinander abgestützt sind, wodurch der Hohlkolben insgesamt stabilisiert wird. Ferner bildet bei der erfindungsgemäßen Ausgestaltung der rückseitige Teil der Einformung einen vorderen Flächenbereich der Gelenkausnehmung. Hierdurch steht der hintere Bereich der Einformung als Gelenkfläche der axialen Abstützung zur Verfügung. Ein in der Gelenkausnehmung sitzender Kugelkopf ist deshalb nicht nur über die Außenwand des Hohlkolbens sondern auch über den Dorn axial abgestützt, was zur angestrebten stabilen Bauweise beiträgt.

Das erfindungsgemäße Verfahren nach Anspruch 9 ermöglicht eine einfache, schnelle und kostengünstige Herstellung des Hohlkolbens, wobei die vorbeschriebenen Vorteile dem nach diesem Verfahren hergestellten Hohlkolben ebenfalls zukommen.

Eine einfache Bauweise für den Hohlkolben wird dann erreicht, wenn sich der Dorn einteilig von einer vorderseitigen Stirnwand des Hohlkolbens erstreckt. Dabei kann die Einformung aus einem hohlzylindrischen Kolbenrohrteil gefertigt werden, das durch spanabhebende oder spanlose Umformung, z. B. durch Kalt- oder Warmfließpressen vorgefertigt ist.

Eine lange und große Mantel- bzw. Führungsfläche für den Hohlkolben wird dadurch erreicht, daß die Einformung nicht aus einem im wesentlichen hohlzylindrischen Kolben-Vorfertigungsteil, sondern aus einem Vorfertigungsteil mit einer vorgefertigten, außenseitigen Materialverdickung derart eingeformt wird, dass die Verdickung von außen nach innen verlagert wird. Hierdurch lässt sich ein durch die Einformung außenseitig gebildeter Hohlraum verringern und die Außen- oder Führungsfläche des Hohlkolbens vergrößern. Vorzugsweise wird diese Einformung so ausgeführt, dass nach dem Einformen die Mantel- bzw. Führungsfläche des Hohlkolbens im Bereich der Einformung durchgehend verläuft. Dies kann auch präzise dadurch erreicht werden, dass die Einformung beim Einformen zunächst dicker ausgeführt wird als die Außenabmessung des Hohlkolbens und in einem letzten Bearbeitungsgang diese Verdickung an die Außenabmessung des Hohlkolbens angepasst wird (z.B. durch Schleifen), was vor oder nach einem Härten wenigstens der Oberflächenschicht des Hohlkolbens geschehen kann.

Im Betrieb einer erfindungsgemäßen Axialkolbenmaschine entsteht im Bereich der hin- und herbewegten Kolben, d. h. in den Kolben selbst und im die Kolben führenden Zylinder, eine beträchtliche Erwärmung, die aufgrund der Reibung in den Kolbenführungen entsteht und bei einem hohen Arbeitsdruck zu beträchtlich hohen Betriebstemperaturen führt.

Ein beispielhafter Hohlkolben welcher nicht Bestandteil der Erfindung ist, weist in seinem hinteren Endbereich wenigstens einen Kanal auf, der den Hohlraum des Hohlkolbens nach außen öffnet.

Dieser beispielhaften Ausgestaltung liegt die Erkenntnis zugrunde, dass eine verbesserte Kühlung durch einen Austausch von im Hohlraum dieses Hohlkolbens befindlicher Betriebsflüssigkeit erreichbar ist.

Zwar ist beim Vorhandensein nur eines Kanals ein Austausch der Betriebsflüssigkeit verhältnismäßig gering, jedoch werden im Betrieb auf Grund der Bewegungen der Kolben Fliehkräfte erzeugt, die den Austausch der Betriebsflüssigkeit im Hohlkolben verbessern.

Es ist deshalb vorteilhaft, mehrere Kanäle im Hohlkolben anzuordnen, die einen Abstand voneinander aufweisen, der bezüglich des angestrebten Betriebsflüssigkeitsaustausches möglichst groß sein soll.

Der wenigstens eine Kanal ist so anzuordnen, dass seine Außenmündungsöffnung im Betrieb des Kolbens wenigstens zeitweise zum Hohlraum der Kolbenmaschine offen ist, in dem sich Betriebsflüssigkeit bzw. Leckflüssigkeit bei Niederdruck befindet. Der Austausch der Betriebsflüssigkeit durch den oder die Kanäle ist im Betrieb durch die Plantschbewegungen der sich im Hohlraum befindlichen Betriebsflüssigkeit gewährleistet. Durch die Plantschbewegungen gelangt die Betriebsflüssigkeit in alle Bereiche des Hohlraums, so dass von einem wenn auch kleinen doch permanenten Austausch der Betriebsflüssigkeit durch den Kanal ausgegangen werden kann.

Ferner weist der beispielhafte Hohlkolben Merkmale auf, die zur Stabilisierung des Kolbens und der Gelenkverbindung sowie zur Kühlung beitragen und zur einfachen und kostengünstig herstellbaren Ausgestaltungen führen.

Nachfolgend werden vorteilhafte Ausgestaltungen der Erfindung anhand von bevorzugten Ausführungsbeispielen und Zeichnungen näher erläutert. Es zeigen:
- Fig. 1: einen erfindungsgemäßen Hohlkolben als Kolben-Fertigteil im axialen Schnitt;
- Fig. 2: eine Kolben-Baueinheit, die einen erfindungsgemäßen Hohlkolben und einen damit gelenkig verbundenen Gleitschuh umfasst;
- Fig. 3: ein Rohteil in einer ersten Vorfertigungsstufe für einen erfindungsgemäßen Hohlkolben;
- Fig. 4: ein Rohteil in einer ersten Vorfertigungsstufe in abgewandelter Ausgestaltung für einen erfindungsgemäßen Hohlkolben;
- Fig. 5: ein Kolben-Vorfertigungsteil in einer zweiten Vorfertigungsstufe;
- Fig. 6: ein Kolben-Vorfertigungsteil in einer dritten Vorfertigungsstufe;
- Fig. 7: ein Kolben-Vorfertigungsteil in einer zweiten Vorfertigungsstufe in abgewandelter Ausgestaltung;
- Fig. 8: ein Kolben-Vorfertigungsteil in der dritten Vorfertigungsstufe in abgewandelter Ausgestaltung;
- Fig. 9: ein Kolben-Vorfertigungsteil in der dritten Vorfertigungsstufe in weiter abgewandelter Ausgestaltung;
- Fig. 10: das Kolben-Vorfertigungsteil in der dritten Vorfertigungsstufe in weiter abgewandelter Ausgestaltung;
- Fig. 11: das Kolben-Vorfertigungsteil in der dritten Vorfertigungsstufe in weiter abgewandelter Ausgestaltung;
- Fig. 12: das Kolben-Vorfertigungsteil in der dritten Vorfertigungsstufe in weiter abgewandelter Ausgestaltung.

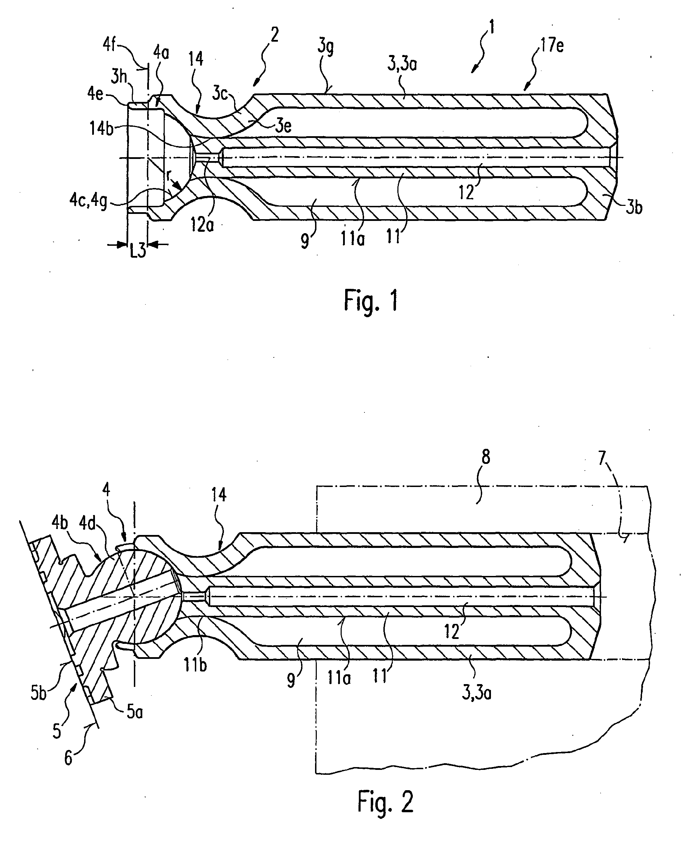

Der mit 1 bezeichnete Hohlkolben besteht aus einem Basisabschnitt 2, von dem sich in die eine Achsrichtung ein Kolbenschaft 3 nach vorne erstreckt und in die andere Achsrichtung ein Gelenkteil 4a nach hinten erstreckt, das Teil einer Kugelgelenkverbindung 4 ist, die den Kolben 1 mit einem Gleitschuh 5 allseitig schwenkbar verbindet, der ein korrespondierendes Gelenkteil 4b aufweist. Das Gelenkteil 4a am Kolben 1 wird bei allen Ausführungsbeispielen durch eine kalottenförmige Gelenkausnehmung 4c gebildet, in die ein Kugelkopf 4d am Gleitschuh 5 mit geringem Bewegungsspiel passt. Die Gelenkausnehmung 4c ist so tief angeordnet, dass ihr freier Rand 4e sich über die zugehörige Äquatorebene 4f hinaus erstreckt und so eingeformt ist, dass sie den Kugelkopf 4d mit geringem Bewegungsspiel formschlüssig hintergreift. Hierzu kann der freie Rand 4e im kalten oder erwärmten Zustand seines Materials zusammengedrückt sein, wie es Fig. 2 zeigt. Um das Zusammendrücken zu erleichtern, kann die Wanddicke des freien Randes 4e im die Äquatorebene 4f überragenden Bereich außen verjüngt sein, was ebenfalls aus Fig. 2 zu entnehmen ist.

Der Gleitschuh 5 weist im Übrigen eine den Kugelkopf 4d tragende Fußscheibe 5a auf, deren ebene Fußfläche 5b eine Gleitfläche bildet, mit der der Hohlkolben 1 im in einer Axialkolbenmaschine montierten Zustand an einer Schrägscheibe oder Taumelscheibe abgestützt ist, deren schräge Fläche durch eine Linie 6 verdeutlicht ist. Dabei ist der Kolbenschaft 3 in einer Kolbenbohrung 7 eines Zylinders 8 längs hin und her verschiebbar gelagert, der drehbar oder undrehbar in einem nicht dargestellten Gehäuse der Axialkolbenmaschine gelagert sein kann.

Der mit 9 bezeichnete Hohlraum des Kolbenschaftes 3 ist rückseitig durch den Basisabschnitt 2, umfangsseitig durch eine hohlzylindrische Umfangswand 3a und vorderseitig durch eine Stirnwand 3b verschlossen. Der Hohlkolben 1 weist einen zentralen Dorn 11 auf, der sich von der Stirnwand 3b bis zum Basisabschnitt 2 erstreckt, an diesem axial und radial abgestützt ist und dadurch den Hohlkolben 1 insgesamt und die Stirnwand 3b axial stabilisiert.

Bei den vorliegenden Ausführungsbeispielen erstreckt sich der Dorn 11 einteilig von der Stirnwand 3b nach hinten bis in den hinteren Endbereich des Basisabschnitts 2, was im Weiteren noch beschrieben wird. Es erstreckt sich ein Kanal 12 axial durchgehend durch den Dorn 11, wobei im Kanal 12 eine Drossel 12a angeordnet ist.

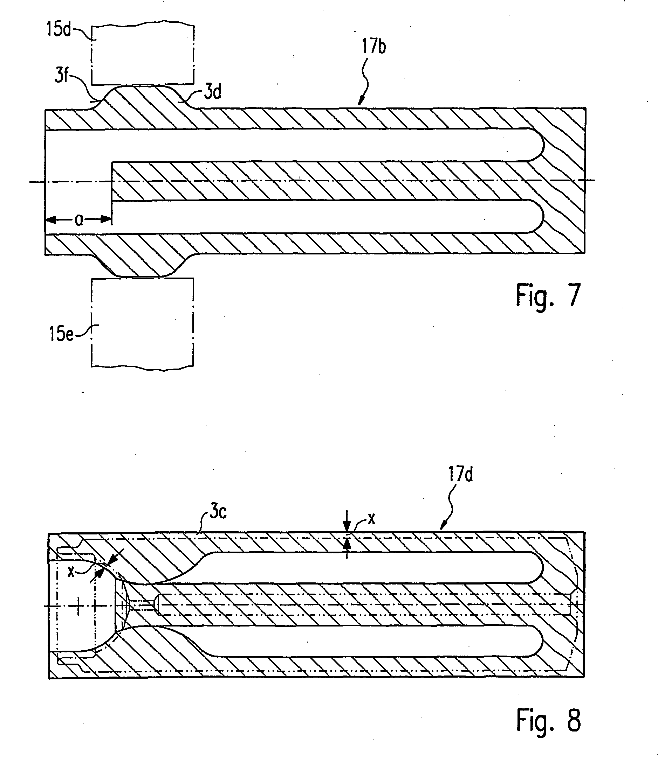

Der Basisabschnitt 2 weist eine Einformung 14 auf, die bei den Ausführungsbeispielen nach Fig. 1 bis 6 durch ein ringförmiges Einformen eines axialen Abschnitts 3c der Umfangswand 3a und bei den Ausführungsbeispielen nach Fig. 7 bis 12 durch ein ringförmiges Einformen eines axialen Umfangswand-Abschnitts 3c, der außen eine ringförmige Materialverdickung 3d aufweist, gebildet ist. Die Einformung 14 ist jeweils so weit eingeformt, dass sie radial einwärts gegen die Mantelfläche 11a des Dorns 11 drückt. Hierdurch wird der Hohlraum 9 rückseitig dicht verschlossen. Die Einformung 14 bildet mit ihrer hinteren Stufenfläche 14a wenigstens einen Teil der Ausnehmungsfläche 4c.

Die Einformung 14 nach Fig. 1 bis 6 lässt sich durch ein Rundkneten oder Rundwalzen mit in Fig. 1 angedeuteten Formwerkzeugen 15a, 15b jeweils mit einer im Querschnitt konvex gerundeten Mantelfläche 15c einformen, wobei der radial einwärts gerichtete Verformungsdruck auf die Mantelfläche des Hohlkolbens 1 ausgeübt wird. Dabei bildet sich der konvex gerundete innere Materialansatz 3e, der radial einwärts gegen den Dorn 11 drückt.

Beim Ausführungsbeispiel nach Fig. 7 und folgende, lässt sich die Einformung 14 durch zylindrische Formwerkzeuge 15d, 15e radial einwärts einformen, wobei die Materialverdickung 3d völlig eingeformt wird und sich der ebenfalls im Querschnitt konvex gerundete ringförmige innere Materialansatz 3e ausbildet, der gegen die Mantelfläche 11a des Dornes 11 drückt. Das Volumen der Materialverdickung 3d entspricht etwa dem Volumen des Materialansatzes 3e.

Es ist aus Gründen eines vorteilhaften Materialflusses beim Einformen vorteilhaft, die Materialverdickung 3d mit radial nach außen konvergenten Ringseitenflächen 3f auszubilden. Der Neigungswinkel dieser Ringseitenflächen 3f kann z.B. etwa 45° betragen.

Es ist bei allen Ausführungsbeispielen vorteilhaft, die Einformung 14 mit einer so großen radial einwärts gerichteten Druckkraft auszuführen, dass die Einformung 14 nicht nur gegen die Mantelfläche 11a des Dornes 11 drückt, sondern auch in dessen Mantelfläche 11a eine Einformung 11b in Form einer z.B. gerundeten Ringnut erzeugt. Hierdurch wird nicht nur eine Klemmverbindung zwischen der Einformung 14 und dem Dorn 11 geschaffen, sondern eine formschlüssig wirksame Verbindung, die beträchtlich axial gerichtete Kräfte zu übertragen oder Belastungen aufzunehmen vermag.

Um insbesondere bei einer solchen verstärkten Einformung 14b genügend radial auswärts gerichtete Widerstandskräfte im Dorn 11 zu haben, ist es im weiteren vorteilhaft, die Drossel 13 mit einer vergrößerten Wanddicke für den Dorn im Bereich der Einformung 14 auszubilden, so dass der Dorn 11 der Einformung 14 eine größere radial auswärts gerichtete Widerstandskraft entgegensetzen kann und die Einformung 14 mit einem größeren Materialdruckkontakt ausgeführt werden kann, wodurch die gegenseitige Abstützung und die Abdichtung verbessert werden.

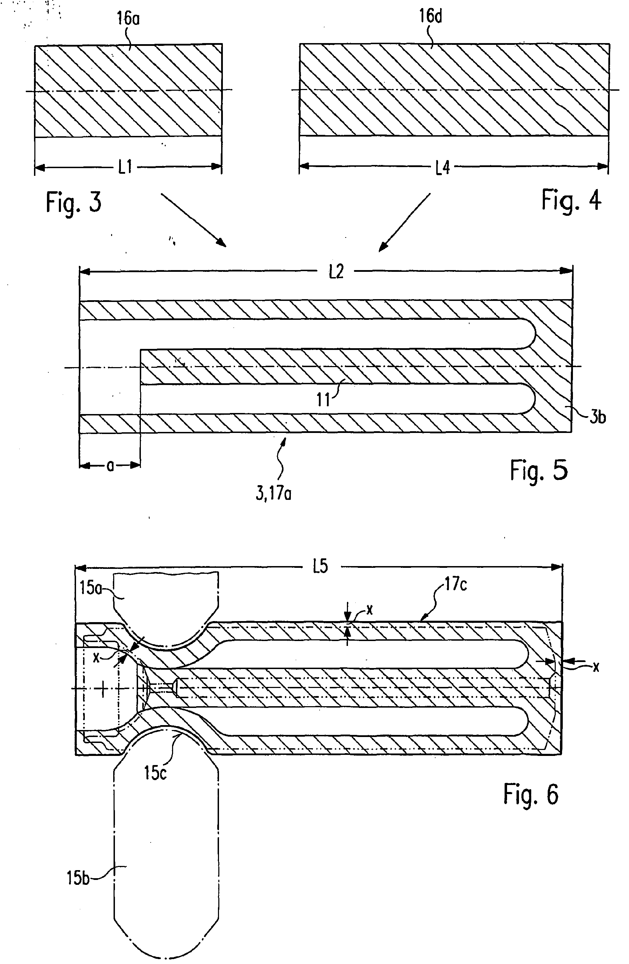

Bei einem soweit beschriebenen Hohlkolben 1 handelt es sich um ein Präzisionsteil, dessen Mantelfläche 3g eine Passfläche und Führungsfläche für die Längsführung des Hohlkolbens 1 ist. Dies gilt auch für die Innenfläche 4g der Gelenkausnehmung 4c wenigstens im Bereich ihrer Rundung. Es ist deshalb vorteilhaft, die Mantelfläche 3g und die Innenfläche 4g bezüglich ihrer fertigen Form und Größe mit einem Übermaß x auszubilden, das durch eine Nachbearbeitung auf seine endgültige Passgröße gebracht wird, z.B. durch Drehen, Fräsen oder Schleifen. Die Übermaße x sind z. B. in Fig. 6, 8 und folgende dargestellt.

In Fig. 6 ist ein soweit vorgefertigter Hohlkolben als Kolben-Vorfertigungsteil dargestellt. Dabei kann die Vorfertigung in mehreren Stufen und in unterschiedlichen Fertigungsarten erfolgen, wie es zum einen Fig. 3 und 5 sowie zum anderen Fig. 4 und Fig. 5 zeigen.

Beim Ausführungsbeispiel nach Fig. 3 wird in einer ersten Vorfertigungsstufe ein Rohteil 16a vorgefertigt, das sich vom Vorfertigungsteil 17a der zweiten Vorfertigungsstufe insbesondere durch eine geringe axiale Länge L1 unterscheidet, die wesentlich kleiner ist als die Länge L2 des Vorfertigungsteil 17a der zweiten Vorfertigungsstufe. Die Fertigung des Rohteils 16a kann spanabhebend erfolgen, z.B. durch Ablängen eines stangenförmigen Halbzeugs. Die Verformung des Rohteils 16a zum Vorfertigungsteil 17a erfolgt spanlos durch Fließpressen in einem nicht dargestellten Fließpresswerkzeug. Das Fließpressen kann im kalten Zustand (z.B. bei Raumtemperatur) oder im warmen Zustand (z. B. auf eine günstige Fließtemperatur erwärmt) erfolgen. Beim Fließpressen werden die Umfangswand 3a und der Dorn 11 fließgepresst, wobei die Stirnwand 3b ausgebildet wird. Das Fließpressen erfolgt in der Weise, dass der Dorn 11 kürzer ist als die Umfangswand 3a und deshalb sein rückseitiges freies Ende einen axialen Abstand a vom rückseitigen freien Ende der Umfangswand 3a aufweist. Der Abstand a entspricht etwa dem Radius r der Gelenkausnehmung 4c zuzüglich der Länge L3, mit der der Umfangswandabschnitt 3h die Äquatorialebene 4f nach hinten überragt.

Alternativ kann das Vorfertigungsteil 17a aus einem Rohteil 16b nach Fig. 4 spanabhebend, z.B. durch Bohren eines Ringlochs, gefertigt werden. Bei dieser spanabhebenden Fertigung ergeben sich zumindest an der Mantelfläche des Dornes 11 und an der Innenmantelfläche der Umfangswand 3a in Umfangsrichtung erstreckende Riefen, die die Festigkeit des fertigen Hohlkolbens 1 beeinträchtigen können. Dagegen werden der Dorn 11 und die Umfangswand 3a beim Fließpressen verfestigt und stabilisiert, wobei sich außerdem längs verlaufende Materialfasern ausbilden, die die Materialfestigkeit weiter vergrößern.

Beim Ausführungsbeispiel nach Fig. 4 entspricht die Länge L4 des Rohteils 16d etwa der Länge L2 des Vorfertigungsteils 17a, das vergrößert dargestellt ist.

Die Vorfertigung des abgewandelten Vorfertigungsteils 17b gemäß Fig. 7 kann in vorbeschriebener Weise aus Rohteilen gemäß Fig. 3 und Fig. 4 ebenfalls durch Fließpressen oder durch spanabhebende Fertigung erfolgen. Zwecks Vermeidung von Wiederholungen und zur Verkürzung der Beschreibung wird deshalb auf diesen Beschreibungsteil Bezug genommen.

Bei der Fertigungsfortsetzung des Vorfertigungsteils 17a nach Fig. 5 bei der dritten Vorfertigungsstufe zum Vorfertigungsteil 17c nach Fig. 6 oder bei der Fertigungsfortsetzung des Vorfertigungsteils 17b nach Fig. 7 bei der dritten Vorfertigungsstufe zum Vorfertigungsteil 17d nach Fig. 8 wird jeweils die Einformung 14 eingeformt, was durch die gerundeten Form- und Gegenformwerkzeuge 15a, 15b nach Fig. 1 oder die etwa zylindrischen Form- und Gegenformwerkzeuge 15d, 15e nach Fig. 7 erfolgt.

Das Volumen der Materialverdickung 3d ist in einer solchen Größe vorbestimmt, dass nach dem Einformen der Einformung 14 das Vorfertigungsteil 17d (Fig. 8) etwa zylindrisch ist und zwar mit dem Übermaß x.

Die Einformung 14 wird jeweils so eingeformt, dass sie mit ihrer hinteren Stufenfläche 14a die Gelenkausnehmung 4c begrenzt und zwar unter Berücksichtigung des Übermaßes x. In vergleichbarer Weise kann auch der Dorn 11 mit einem solchen Abstand a vorgefertigt werden, so dass er die Gelenkausnehmung 4c an deren Vorderseite ebenfalls begrenzt und zwar ebenfalls unter Berücksichtigung des Übermaßes x. Alternativ kann der Abstand a jedoch auch größer bemessen sein, so dass der Dorn 11 die Gelenkausnehmung 4c zwar vorderseitig begrenzt, jedoch nicht deren sphärische Lagerfläche bildet, sondern von dieser sphärischen Lagerfläche (fertig ausgebildete Fläche) einen axialen Abstand aufweist, was nicht dargestellt ist. Dies ist ebenfalls möglich, weil der innere Materialansatz der Einformung 14 eine hinreichend große Lagerfläche der Gelenkausnehmung 4c bildet, so dass die Stirnfläche des Dornes 11 von dieser fertigen Lagerfläche nach vorne abstehen kann.

Bei einer weiteren Vorfertigungsstufe können die Mantelfläche 3g und die Schwenk- bzw. Innenfläche 4g der Gelenkausnehmung 4c und ggf. auch die Stirnfläche der Stirnwand 3b spanabhebend auf Endmaß bearbeitet werden, was z.B. durch Fräsen oder Schleifen erfolgen kann. Dabei kann vor oder nach dieser Feinbearbeitung auf Endmaß eine Härtung des Materials des Hohlkolbens 1 erfolgen, z.B. eine Oberflächenhärtung, vorzugsweise durch Nitrieren.

Danach kann das soweit gefertigte Kolben-Fertigteil 17e nach Fig. 1 mit dem Gleitschuh 5 zusammengesetzt und durch Einformen des Umfangswandabschnitts 3h formschlüssig verbunden werden, wodurch die Kolben-Baueinheit nach Fig. 2 gebildet wird.

Die vorgenannten Herstellungsmaßnahmen gelten entsprechend auch für das Ausführungsbeispiel nach Fig. 8.

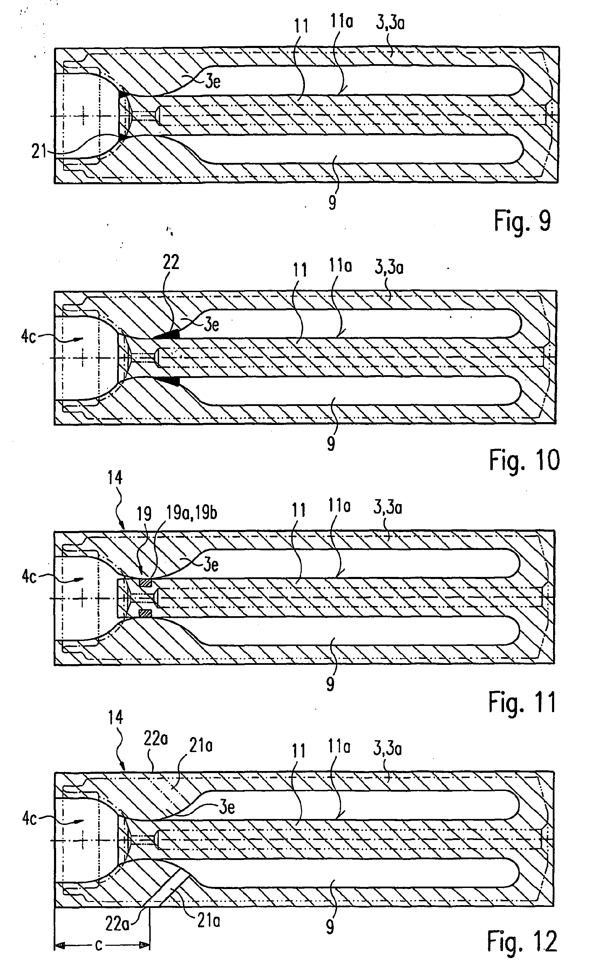

Die Fig. 9 bis 11 zeigen weitere Fertigungsmaßnahmen, die dazu dienen, die Verbindung zwischen der Einformung 14 und dem Dorn 11 zu stabilisieren und/oder abzudichten.

Beim Ausführungsbeispiel nach Fig. 9 ist der Dorn 11 mit der Einformung 14 verschweißt. Die Schweißnaht 21 kann im Bereich der Fuge zwischen dem Dorn 11 und der Einformung 14 liegen und vor oder nach dem Bearbeiten auf Endmaß ausgeführt sein.

Beim Ausführungsbeispiel nach Fig. 10 sind der Dorn 11 und die Einformung 14 miteinander verlötet, was an der vorderseitigen (siehe Fig. 10) oder an der rückseitigen Stufenfläche erfolgen kann. Bei einer vorderseitigen Verlötung 22 ist ein zum Löten erforderliches Lot vor dem Einformen der Einformung 14 in den Hohlraum 9 einzugeben.

Beim Ausführungsbeispiel nach Fig. 11 ist die zwischen dem Dorn 11 und der Einformung 14 vorhandene Fuge durch eine Dichtung 19 abgedichtet. Die Dichtung 19 ist vorzugsweise durch einen Dichtring 19a gebildet, der in einer Ringnut 19b sitzt und mit der gegenüberliegenden Ringfläche dichtend zusammenwirkt. Die Ringnut 19b kann in der Mantelfläche 11a des Dorns 11 oder in der Innenmantelfläche der Einformung 14 angeordnet sein.

Das Ausführungsbeispiel nach Fig. 12 zeigt folgende besondere Ausgestaltung, die bei einem vorbeschriebenen Hohlkolben 10 und auch bei Hohlkolben in anderer Bauweise ausgebildet sein kann.

Bei dieser Ausgestaltung ist der Hohlraum 9 durch einen Kanal 21 mit der Umgebung des Hohlkolbens verbunden, dessen äußere Mündungsöffnung 22 sich im hinteren Endbereich des Hohlkolbens 1 befindet. Die Mündungsöffnung 22 kann so positioniert sein, dass sie im Betrieb einer den Hohlkolben 1 aufweisenden Kolbenmaschine, insbesondere Axialkolbenmaschine, im Hubbetrieb wenigstens zeitweise aus dem Zylinder 8 und in den Hohlraum des Gehäuses der Kolbenmaschine gelangt. Dies ist dann der Fall, wenn die Mündungsöffnung 22 sich im Hubbetrieb zeitweise in der Kolbenführung befindet, in der sie durch die Kolbenmantelfläche der Kolbenbohrung 7 im wesentlichen abgedeckt ist, und im Bereich des hinteren Todpunktes des Kolbenhubes mit dem Hohlraum des Gehäuses in Verbindung steht, z.B. aus der Kolbenbohrung 7 nach hinten herausragt.

Der Vorteil dieser Ausgestaltung des Hohlkolbens 1, die unabhängig ist von den vorbeschriebenen Ausführungsbeispielen, besteht darin, dass durch den Kanal 21 ein Austausch zwischen dem sich im Hohlraum 9 des Hohlkolbens 1 befindlichen hydraulischen Fluid und dem Fluid im Hohlraum des Gehäuses erfolgt. Hierdurch wird die Kühlung des Hohlkolbens verbessert.

Es können ein oder mehrere auf dem Umfang verteilt angeordnete Kanäle 21 vorgesehen sein, wie es in Fig. 12 andeutungsweise durch Strichpunktlinien dargestellt ist. Hierdurch wird der Fluidaustausch verbessert und vergrößert. Wenn sich im Betrieb des Hohlkolbens 1 jeweils wenigstens ein Kanal 21 radial innen liegend und radial außen liegend befinden, kann der Fluidaustausch durch eine durch die Fliehkraft hervorgerufene Förder-Wirkung erfolgen, die den Fluidaustausch forciert.

Beim Ausführungsbeispiel befindet sich die wenigstens eine äußere Mündungsöffnung 22 in einem Abstand c von der Rückseite des Hohlkolbens 1, der kleiner ist als die halbe Länge L5 des Kolbens und vorzugsweise etwa 1/5 der Kolbenlänge L5 entspricht.

## Patentansprüche

1. Hohlkolben (1) für eine Kolbenmaschine, insbesondere eine Axialkolbenmaschine, der eine Umfangswand (3a), einen zentralen Dorn (11), an seinem vorderen Ende eine Stirnwand (3b) und an seinem rückseitigen Stirnende ein Gelenkteil (4a) aufweist, wobei der Hohlkolben (1) zwischen der Umfangswand (3a) und dem Gelenkteil (4a) eine ringförmige Einformung (14) aufweist, die gegen den Dorn (11) geformt ist, und wobei ein rückseitiger Abschnitt der Einformung (14) einen vorderen Abschnitt des Gelenkteils (4a) bildet,
**dadurch gekennzeichnet,**
**dass** der Dorn (11) im Bereich der Einformung (14) endet, dass das Gelenkteil (4a) eine kalottenförmige Gelenkausnehmung (4c) aufweist und
**dass** der rückseitige Abschnitt der Einformung (14) wenigstens einen Teil einer Gelenkfläche (4g) der Gelenkausnehmung (4c) bildet.

2. Hohlkolben nach Anspruch 1,
**dadurch gekennzeichnet,**
**dass** der Dorn (11) rückseitig ebenfalls einen Teil der Gelenkfläche (4g) der Gelenkausnehmung (4c) bildet.

3. Hohlkolben nach Anspruch 1 oder 2,
**dadurch gekennzeichnet,**
**dass** die Umfangswand (3a) und/oder der Dorn (11) einteilig mit der Stirnwand (3b) ausgebildet ist bzw. sind.

4. Hohlkolben nach Anspruch 3,
**dadurch gekennzeichnet,**
**dass** die Stirnwand (3b) und die Umfangswand (3a) und/oder der Dorn (11) spanlos aneinander geformt sind.

5. Hohlkolben nach einem vorherigen Ansprüche,
**dadurch gekennzeichnet,**
**dass** der Dorn (11) axial von einem Kanal (12) durchsetzt ist.

6. Hohlkolben nach Anspruch 5,
**dadurch gekennzeichnet,**
**dass** der Kanal (12) eine Drossel (12a) aufweist, die vorzugsweise im Bereich der Einformung (14) angeordnet ist.

7. Hohlkolben nach einem der vorherigen Ansprüche,
**dadurch gekennzeichnet,**
**dass** die Einformung (14) in die Mantelfläche (11a) des Dorns (11) hineingedrückt ist.

8. Hohlkolben nach einem der vorherigen Ansprüche,
**dadurch gekennzeichnet,**
**dass** die Fuge zwischen der Einformung (14) und dem Dorn (11) abgedichtet ist, insbesondere durch eine Schweißnaht (21) oder eine Lötnaht (22) oder eine Ringdichtung (19).

9. Verfahren zum Herstellungen eines Hohlkolbens (1) mit einer Umfangswand (3a), einem zentralen Dorn (11), einer Stirnwand (3b) an seinem vorderen Ende und einem Gelenkteil (4a) an seinem hinteren Ende, bei dem eine ringförmige Einformung (14) der Umfangswand (3a) gegen die Mantelfläche (11a) des Dorns (11) geformt wird,
**dadurch gekennzeichnet,**
**dass** das Gelenkteil (4a) als kalottenförmige Gelenkausnehmung (4c) geformt wird,
**dass** der Dorn (11) so lang ausgebildet wird, daß er im Bereich der Einformung (14) endet und
**dass** die Einformung (14) so geformt wird, daß ihr hinterer Abschnitt wenigstens einen Teil einer Gelenkfläche (4g) der Gelenkausnehmung (4c) bildet.

10. Verfahren nach Anspruch 9,
**dadurch gekennzeichnet,**
**dass** die Umfangswand (3a) im Bereich der Einformung (14) mit einer Materialverdickung (3d) vorgefertigt wird und mit der Materialverdickung (3d) so eingeformt wird, dass ihre Außenumfangsfläche im wesentlichen mit der übrigen Außenumfangsfläche (3d) der Umfangswand (3a) fluchtet.

11. Verfahren nach Anspruch 10,
**dadurch gekennzeichnet,**
**dass** die Materialverdickung (3d) mit konvergenten Seitenflächen (3f) vorgefertigt wird.

12. Verfahren nach Anspruch 9,
**dadurch gekennzeichnet,**
**dass** die Umfangswand (3a) mit einem Querschnitts-Übermaß (x) vorgefertigt wird und die Einformung (14) so weit eingeformt wird, dass ihre Außenumfangsfläche dem Übermaß (x) entspricht.

13. Verfahren nach Anspruch 9 oder 12,
**dadurch gekennzeichnet,**
**dass** der Dorn (11) so lang ausgebildet wird, dass er rückseitig einen Teil der Gelenkfläche (4g) der Gelenkausnehmung (4c) bildet.

14. Verfahren nach einem der Ansprüche 9, 12 oder 13,
**dadurch gekennzeichnet,**
**dass** die Einformung (14) in die Mantelfläche (11a) des Dorns (11) eingedrückt wird.

15. Verfahren nach einem der Ansprüche 9 oder 12 bis 14,
**dadurch gekennzeichnet,**
**dass** die Umfangswand (3a) im Bereich der Einformung (14) mit einer Materialverdickung (3d) vorgefertigt wird und mit der Materialverdickung (3d) so eingeformt wird, dass ihre Außenumfangsfläche im wesentlichen mit der übrigen Außenumfangsfläche (3d) der Umfangswand (3a) fluchtet.

## Claims

1. Tubular piston (1) for a piston engine, in particular an axial piston engine, which piston has a peripheral wall (3a), a central pin (11), an end wall (3b) at its front end and a joint part (4a) at its rear end, wherein said tubular piston (1) has, between the peripheral wall (3a) and the joint part (4a), an annular formed-in portion (14) which is formed against the pin (11), and wherein a rear section of the formed-in portion (14) constitutes a front section of the joint part (4a),
**characterised in that**
the pin (11) terminates in the region of the formed-in portion (14),
that the joint part (4a) has a cap-shaped joint recess (4c), and
that the rear section of the formed-in portion (14) constitutes at least part of a joint surface (4g) belonging to the joint recess (4c).

2. Tubular piston according to Claim 1,
**characterised in that**
the pin (11) likewise constitutes, at its rear end, part of the joint surface (4g) of the joint recess (4c).

3. Tubular piston according to Claim 1 or 2,
**characterised in that**
the peripheral wall (3a) and/or the pin (11) is/are constructed in one piece with the end wall (3b).

4. Tubular piston according to Claim 3,
**characterised in that**
the end wall (3b) and the peripheral wall (3a) and/or the pin (11) are formed onto one another in a non-cutting manner.

5. Tubular piston according to one of the preceding claims,
**characterised in that**
the pin (11) has a duct (12) passing through it axially.

6. Tubular piston according to Claim 5,
**characterised in that**
the duct (12) has a throttle (12a) which is preferably disposed in the region of the formed-in portion (14).

7. Tubular piston according to one of the preceding claims,
**characterised in that**
the formed-in portion (14) is pressed into the superficies (11a) of the pin (11).

8. Tubular piston according to one of the preceding claims,
**characterised in that**
the junction between the formed-in portion (14) and the pin (11) is sealed, in particular by a welded seam (21) or a soldered seam (22) or a ring seal (19).

9. Method of manufacturing a tubular piston (1) having a peripheral wall (3a), a central pin (11), an end wall (3b) at its front end and a joint part (4a) at its rear end, in which an annular formed-in portion (14) of the peripheral wall (3a) is formed against the superficies (11a) of the pin (11),
**characterised in that**
the joint part (4a) is formed as a cap-shaped joint recess (4c),
that the pin (11) is constructed with a length such that it terminates in the region of the formed-in portion (14), and
that the formed-in portion (14) is formed in such a way that its rear section constitutes at least part of a joint surface (4g) belonging to the joint recess (4c).

10. Method according to Claim 9,
**characterised in that**
the peripheral wall (3a) is prefabricated with a thickened portion of material (3d) in the region of the formed-in portion (14) and is formed-in, with the thickened portion of material (3d), in such a way that its outer peripheral surface is substantially in alignment with the rest of the outer peripheral surface (3d) of the peripheral wall (3a).

11. Method according to Claim 10,
**characterised in that**
the thickened portion of material (3d) is prefabricated with convergent lateral surfaces (3f).

12. Method according to Claim 9,
**characterised in that**
the peripheral wall (3a) is prefabricated with a cross-sectional oversize (x) and the formed-in portion (14) is formed-in to an extent such that its outer peripheral surface corresponds to said oversize (x).

13. Method according to Claim 9 or 12,
**characterised in that** the pin (11) is constructed with a length such that it forms, at the rear end, part of the joint surface (4g) of the joint recess (4c).

14. Method according to one of Claims 9, 12 or 13,
**characterised in that**
the formed-in portion (14) is pressed into the superficies (11a) of the pin (11).

15. Method according to one of Claims 9 or 12 to 14,
**characterised in that**
the peripheral wall (3a) is prefabricated with a thickened portion of material (3d) in the region of the formed-in portion (14), and is formed-in, with the thickened portion of material (3d), in such a way that its outer peripheral surface is substantially in alignment with the rest of the outer peripheral surface (3d) of the peripheral wall (3a).

## Revendications

1. Piston creux (1) pour une machine à pistons, notamment une machine à pistons axiaux, lequel piston présente une paroi périphérique (3a), une tige centrale (11), une paroi frontale (3b) à son extrémité avant et une partie articulée (4a) à son extrémité frontale arrière, le piston creux (1) présentant une sphéroïdisation annulaire (14) entre la paroi périphérique (3a) et la partie articulée (4a), laquelle est moulée contre la tige (11), et une section arrière de la sphéroïdisation (14) formant une section avant de la partie articulée (4a),
**caractérisé en ce que**
la tige (11) se termine dans la zone de la sphéroïdisation (14), **en ce que** la partie articulée (4a) présente un évidement articulé (4c) en forme de calotte, et **en ce que** la section arrière de la sphéroïdisation (14) forme au moins une partie d'une surface articulée (4g) de l'évidement articulé (4c).

2. Piston creux selon la revendication 1,
**caractérisé en ce que**
la tige (11) côté arrière forme également une partie de la surface articulée (4g) de l'évidement articulé (4c).

3. Piston creux selon la revendication 1 ou 2,
**caractérisé en ce que**
la paroi périphérique (3a) et/ou la tige (11) est/sont réalisée(s) d'un seul tenant avec la paroi frontale (3b).

4. Piston creux selon la revendication 3,
**caractérisé en ce que**
la paroi frontale (3b) et la paroi périphérique (3a) et/ou la tige (11) sont moulées l'une contre l'autre sans enlèvement.

5. Piston creux selon l'une quelconque des revendications précédentes,
**caractérisé en ce que**
la tige (11) est traversée axialement par un canal (12).

6. Piston creux selon la revendication 5,
**caractérisé en ce que**
le canal (12) comprend un étranglement (12a) qui est disposé de préférence dans la zone de la sphéroïdisation (14).

7. Piston creux selon l'une quelconque des revendications précédentes,
**caractérisé en ce que**
la sphéroïdisation (14) est enfoncée dans la surface d'enveloppe (11a) de la tige (11).

8. Piston creux selon l'une quelconque des revendications précédentes,
**caractérisé en ce que**
la jointure entre la sphéroïdisation (14) et la tige (11) est rendue étanche, notamment par un joint de soudure (21) ou un joint de brasage (22) ou un joint d'étanchéité torique (19).

9. Procédé de fabrication d'un piston creux (1) avec une paroi périphérique (3a), une tige centrale (11), une paroi frontale (3b) au niveau de son extrémité avant et une partie articulée (4a) au niveau de son extrémité arrière, dans lequel une sphéroïdisation (14) de la paroi périphérique (3a) est moulée contre la surface d'enveloppe (11a) de la tige (11),
**caractérisé en ce que**
la partie articulée (4a) est formée comme un évidement articulé (4c) en forme de calotte,
on ce que la tige (11) est réalisée d'une longueur telle qu'elle se termine dans la zone de la sphéroïdisation (14) et
**en ce que** la sphéroïdisation (14) est moulée de manière à ce que sa section arrière forme au moins une partie d'une surface articulée (4g) de l'évidement articulé (4c).

10. Procédé selon la revendication 9.
**caractérisé en ce que**
la paroi périphérique (3a) dans la zone de la sphéroïdisation (14) est préfabriquée avec une surépaisseur de matériau (3d) et est déformée avec la surépaisseur de matériau (3d) de telle sorte que sa surface périphérique externe soit alignée essentiellement avec la surface périphérique externe (3d) restante de la paroi périphérique (3a).

11. Procédé selon la revendication 10,
**caractérisé en ce que**
la surépaisseur de matériau (3d) est préfabriquée avec des surfaces latérales (31) convergentes.

12. Procédé selon la revendication 9,
**caractérisé en ce que**
la paroi périphérique (3a) est préfabriquée avec une surdimension de section transversale (x), et **en ce que** la sphéroïdisation (14) est formés si largement que sa surface périphérique externe correspond à la surdimension (x).

13. Procédé selon la revendication 9 ou 12,
**caractérisé en ce que**
la tige (11) est formée d'une longueur telle que, côté arrière, elle forme une partie de la surface articulée (4g) de l'évidement articulé (4c).

14. Procédé selon l'une quelconque des revendications 9, 12 ou 13,
**caractérisé en ce que**
la sphéroïdisation (14) est enfoncée dans la surface d'enveloppe (11a) de la tige (11).

15. Procédé selon l'une quelconque des revendications 9 ou 12 à 14,
**caractérisé en ce que**
la paroi périphérique (3a) dans la zone de la sphéroïdisation (14) est préfabriquée avec une surépaisseur de matériau (3d) et est déformée avec la surépaisseur de matériau (3d) de telle sorte que sa surface périphérique externe soit alignée essentiellement avec la surface périphérique externe (3d) restante de la paroi périphérique (3a).
